# EUROPEAN PATENT SPECIFICATION

(11) **EP 2 642 865 B1**
(45) Date of publication and mention of the grant of the patent: **31.08.2016**
(21) Application number: 11778864.6
(22) Date of filing: 01.11.2011
(51) Int. Cl.: A23F 3/16

(54) **PROCESS FOR PREPARING TEA PRODUCTS**
VERFAHREN ZUR HERSTELLUNG VON TEEPRODUKTEN
PROCÉDÉ DE PRÉPARATION D'UN JUS DE THÉ

(30) Priority: 26.11.2010 IN MU32322010; 25.01.2011 EP 11151933
(43) Date of publication of application: 02.10.2013
(73) Proprietor: Unilever N.V., 3013 AL Rotterdam (NL); Unilever PLC, London EC4Y 0DY (GB)
(72) Inventor: GOVINDASWAMY, Vadivel, Whitefield Bangalore 560 066 (IN); MUKHOPADHYAY, Reshmee, Whitefield Bangalore 560 066 (IN); NAGARAJAN, Kalaivanan, Whitefield Bangalore 560 066 (IN); NARAYANAN, Venkatraj, Venkatrao, Whitefield Bangalore 560 066 (IN); PAYAL, -, Whitefield Bangalore 560 066 (IN); VENKATESH, Purna, Whitefield Bangalore 560 066 (IN); WARBOYS, Michael, John, Sharnbrook Bedford MK44 1LQ (GB)
(74) Representative: Askew, Sarah Elizabeth
(86) International application number: PCT/EP2011/069181
(87) International publication number: WO 2012/069290

(56) References cited:
- WO-A1-2009/059924
- GB-A- 165 644

## Description

### TECHNICAL FIELD OF THE INVENTION

The present invention relates to a process for preparing tea products. More particularly the present invention relates to a process which allows for preparation of tea products comprising tea juice which are suitable for diluting to prepare beverages.

### BACKGROUND TO THE INVENTION

It is known to obtain tea juice by expression from fresh tea leaves.

Tea juice obtained by expression from fresh tea leaves has been disclosed in WO2009059924 A1 (Unilever).

JP2003111558A (HASEGAWA T CO LTD) describes a process where raw tea leaves are steamed to inactivate enzymes, cooled and squeezed and a tea extract is produced from the resulting squeezed liquid.

GB165644 describes a tea-essence free from objectionable odour and excessive viscosity which is produced by concentrating in vacuo at a low temperature the juice obtained by steaming and pressing fresh or dried tea leaves and then pouring the juice into an open pan where it is heated with vigorous agitation at a temperature just below its scorching-point. The juice is further concentrated to the required consistency, or to a dry powder, in a vacuum pan provided with an agitator. If fully manufactured tea or its refuse is used, it is preferably first steeped in a volatile solvent such as alcohol and the solvent subsequently distilled off. The extract can be used for flavouring drinks and foods.

Indian Patent Application 63/Cal/2000 (Indian Institute of Technology, Kharagpur, 2000), granted as IN195073, discloses a process for the production of instant tea comprising the steps of crushing freshly plucked green tea leaves, extracting the juice and subjecting the juice to fermentation. The fermented juice is then steamed, centrifuged and dried by freeze drying or spray drying to obtain instant tea.

Juice expressed from tea leaves (rather than extracted from leaves with a solvent) is found to produce beverages having organoleptic properties different from those of produced from conventional liquid tea concentrates. There is a need to package tea juice in a stable form such that it can be used for on-demand dilution to prepare beverages.

The present inventors have identified that generation of carbon dioxide during the storage of tea juice in containers can cause problems. Generation of CO₂ during storage in sealed containers may lead to build up of pressure causing puffing up of the package or even bursting of the package. Furthermore, during opening of such a package, the beverage may get discharged in an uncontrolled manner causing spillage and/or an unpleasant consumer experience.

The present inventors have now surprisingly found that treating tea juice using a specific time-temperature regime leads to a reduction in CO₂ generation during storage.

It is therefore an object of the present invention to provide a packaged tea juice.

It is another object of the present invention to provide a packaged tea juice in a stable form.

### SUMMARY OF THE INVENTION

According to the present invention there is provided a process of preparing a liquid tea product comprising the steps of:
a) expressing juice from fresh tea leaves that have never been dried to a moisture content of less than 30% by weight, thereby to produce leaf residue and tea juice, wherein during the expression step the moisture content of the tea leaves is between 30 and 90% by weight,
b) heating the tea juice to a temperature in the range 60-150 °C for a time period in the range of 0.5 seconds to 20 minutes, and;
c) packaging the tea juice in a sealed container;
wherein the fresh tea leaves are not heat treated to deactivate fermentation enzymes prior to the step of expressing the juice.

### DEFINITIONS

"Tea" for the purposes of the present invention preferably means material from *Camellia sinensis* var. *sinensis* and/or *Camellia sinensis* var. *assamica.* Especially preferred is material from var. *assamica* as this has a higher level of tea actives than var. *sinensis.*

"Leaf tea" for the purposes of this invention preferably means a tea product that contains tea leaves and/or stem in an uninfused form, and that has been dried to a moisture content of less than 30% by weight, and usually has a water content in the range 1 to 10% by weight (i.e. "made tea").

"Green tea" refers to substantially unfermented tea. "Black tea" refers to substantially fermented tea. "Oolong tea" refers to partially fermented tea.

"Fermentation" refers to the oxidative and hydrolytic process that tea undergoes when certain endogenous enzymes and substrates are brought together, e.g., by mechanical disruption of the cells by maceration of the leaves. During this process colourless catechins in the leaves are converted to a complex mixture of yellow and orange to dark-brown polyphenolic substances.

"Fresh tea leaves" refers to tea leaves, buds and/or stem that have never been dried to a water content of less than 30% by weight, and usually have water content in the range 60 to 90%.

As used herein the term "expressing juice" refers to squeezing out juice from fresh tea leaves using physical force, as opposed to extraction of tea solids with the use of a solvent. Thus the term "expressing" encompasses such means as squeezing, pressing, wringing, spinning and extruding. It is possible that a small amount of solvent (e.g. water) is added to the fresh leaves during the expression step. However, in order to prevent significant extraction of tea solids by the solvent, the moisture content of the leaves during expression is that of fresh tea leaves as defined hereinabove. In other words, during the expression step, the moisture content of the tea leaves is between 30 and 90% by weight, more preferably between 60 and 90%. It is also preferred that the fresh leaves are not contacted with non-aqueous solvent (e.g. alcohols) prior to or during expression, owing to the environmental & economic problems associated with such solvents.

The term "tea solids" as used herein means solid content of the tea juice determined by gravimetry. Preferably, a known mass (about 1 g of tea juice) is taken in a crucible, the crucible is placed in oven at 105 °C for 8 hours, and the residue in the crucible is placed in oven at 105 °C for 8 hours, and the residue in the crucible is weighed to determine tea solids. The tea solids are expressed as % by weight of the tea juice.

The term "water soluble tea solids" as used herein means water extract of the tea solids, that is the soluble matter extracted from the tea solids according to ISO 9768:1994 (Tea: determination of water extract). The principle of the method specified is extraction of soluble matter from a test portion by boiling water under reflux, filtration, washing, drying and weighing of the hot-water-insoluble residue, and calculation of the water extract. The water soluble tea solids are expressed as % by weight of the tea solids.

The term "steaming of tea leaves" as used herein means contacting tea leaves with steam at temperature greater than 80 °C.

The term "pan firing of tea leaves" as used herein means contacting the tea leaves with a heated surface having surface temperature of greater than 100 °C.

### DETAILED DESCRIPTION

### Step (a): Expression of Juice

Step (a) of the process of the invention comprises expressing juice from fresh tea leaves thereby to produce leaf residue and tea juice.

It is particularly preferred that the fresh tea leaves comprise material from var. *assamica* as this variety naturally has a high level of tea actives and so leads to a high level of actives in the leaf residue even after removal of the juice. Most preferably the fresh leaves are fresh leaves from var. *assamica.*

The amount of expressed juice is preferably at least 50 ml per kg of the fresh tea leaves. It is preferred that the amount of juice expressed in step (a) is less than 800 ml per kg of tea leaves, more preferably less than 700 ml and most preferably less than 600 ml. It is also preferred, however that the amount of expressed juice is at least 75 ml per kg of the fresh tea leaves, more preferably at least 100 ml and most preferably at least 150 ml. When referring to the volume of juice expressed per unit mass of tea leaves it should be noted that the mass of the tea leaves is expressed on an "as is" basis and not a dry weight basis. Thus the mass includes any moisture in the leaves.

The juice comprises preferably at least 4% by weight tea solids, more preferably at least 4.5% by weight tea solids and most preferably at least 5% by weight tea solids. There is no particular upper limit for the amount of tea solids in the tea juice and the tea juice may preferably comprise up to 30% by weight tea solids.

Water soluble tea solids preferably constitute 70-100% by weight of the tea solids, more preferably 80-100% by weight of the tea solids and most preferably 90-100% by weight of the tea solids.

The expression step may be achieved in any convenient way so long as it allows for separation of the tea juice from the leaf residue and results in the required quantity of juice. The machinery used to express the juice may, for example, include a hydraulic press, a pneumatic press, a screw press, a belt press, an extruder or a combination thereof. The juice and the leaf residue may be preferably separated by filtration or centrifugal separation.

The juice may be obtained from the fresh leaves in a single pressing or in multiple pressings of the fresh leaves. Preferably the juice is obtained from a single pressing as this allows for a simple and rapid process.

In order to minimise generation of off-flavours in the leaf tea and/or juice, it is preferred that the expression step is performed at ambient temperature. For example, the leaf temperature may be from 5- 40 °C, more preferably 10-30 °C.

The time and pressure used in the expression step can be varied to yield the specified amount of juice. Typically, however, the pressures applied to express the juice will range from 0.5 MPa (73 psi) to 10 MPa (1450 psi). The time over which the pressure is applied will typically range from 1 s to 1 hour, more preferably from 10 s to 20 minutes and most preferably from 30 s to 5 minutes.

Prior to expression, the fresh tea leaves may undergo a pre-treatment including, for example, a unit process selected from maceration, withering, fermentation or a combination thereof.

The fresh leaves are not heat treated to deactivate fermentation enzymes prior to the step of expressing the juice. It is particularly preferred that the fresh tea leaves are not subjected to a step of steaming or pan firing prior to the step of expressing the juice.

It is preferred that the tea leaves have enzyme activity of PPO (polyphenol oxidase) of at least 8000 units per gram of the tea leaves prior to the step of expressing the juice. The enzyme activity of PPO is preferably greater than 10000 units per gram of the fresh tea leaves, more preferably greater than 20000 units per gram of the fresh tea leaves. The enzyme activity is preferably up to 100000 units per gram of the fresh tea leaves.

PPO activity is determined according to the procedure given by Moore and Flurkey (Moore, B. M., Flurkey, W. H. Sodium sulphate activation of a plant polyphenol oxidase. J. Biol. Chem. 1990, 265, 4982-4988). PPO activity is determined by monitoring the o-quinone formation at 400nm using (+)-catechin as the substrate with a spectrophotometer (Perkin -Elmer). The assay is preferably carried out over a period of time in a reaction volume of 3 ml using 0.1 M sodium phosphate-citrate (pH 5.5) as the buffer and (+)-catechin (3mM) at 40°C. The reactions are preferably arrested by addition of 0.2 mL of stop mix solution consisting of acetonitrile, acetic acid and water (60:10:30, v/v/v). One unit of enzyme activity is defined as change in 0.001 absorbance unit at 400 nm per minute in an aliquot of the enzyme used.

The fresh leaves may or may not be fermented prior to expression. If the leaves are fermented prior to expression then it is particularly preferred that they are macerated prior to fermentation.

Whether or not the fresh leaves are fermented, maceration prior to expression may help in decreasing the time and/or pressure required to express the specified quantity of juice.

Tea juice separated from the leaf residue typically has a high content of water-soluble tea solids and is a valuable raw material for producing tea products.

### Step (b): Heating the juice

Step (b) comprises heating the tea juice to 60-150 C for a duration of 0.5 seconds to 20 minutes.

When the juice is heated to a temperature in the range 60-99 °C, the duration is preferably 30 seconds to 20 minutes, more preferably 1-15 minutes and most preferably 2-10 minutes.

When the juice is heated to a temperature in the range 100-150°C, the duration is preferably 1-45 seconds, more preferably 2-30 seconds and most preferably 4-15 seconds.

The step of heating is preferably carried out in a heat exchanger. A double pipe heat exchanger, shell and tube heat exchanger or plate heat exchanger is preferably used for the heating step.

### Step (c): Packaging the juice

The juice is packaged, by which is meant that the juice is contained within a sealed container. In particular the package is sealed to ensure that the chamber is impermeable to microbiological contaminants by which is meant that the packaged composition can be stored for at least 6 months at a temperature of 20°C without the amount of spore-forming bacteria (*Bacillus* and *Clostridia spp*) in the liquid composition increasing above 100 cfu / ml. Suitable packages include sachets, pouches, capsules, cartons or bottles. Preferably the juice is filled into the packaging, then the package is sealed.

From the point of view of cost and convenience of storage and/or packaging, it is preferred that the package is a flexible sachet or pouch. The problem of CO₂ generation is particularly apparent for such packaging. Sachets and pouches are typically formed from flexible packaging material. The most preferred packaging material is a plastic-foil laminate material, especially material comprising a metal (such as aluminium) foil layer sandwiched between two or more plastic (such as polyethylene terephthalate, polyethylene, polypropylene or combinations thereof) layers.

It is preferred that a gas other than oxygen, preferably nitrogen is purged through the juice prior to the step of packaging the liquid tea product in a sealed container. It is further preferred that the container is sealed immediately after the step of purging.

### Stability of the Packaged Juice

The process of the present invention results in juice which generates less CO₂ on storage. It is preferred that the package comprises a headspace and the packaged product can be stored at a temperature of 20 °C for 1 month without the content of CO₂ in the headspace increasing above 25% by volume of the headspace. More preferably the amount of CO₂ in the headspace after 1 month is less than 20% by volume, more preferably still less than 15% by volume and most preferably from 0.001 to 10% by volume.

### The Leaf Residue

Preferably the process comprises a further step of processing the leaf residue to produce leaf tea and/or tea extract. The leaf tea and/or extract is of a quality comparable to that of conventional leaf teas or extracts even though it has been produced from leaf residue which has had the juice removed therefrom. Thus the leaf residue is processed separately from the tea juice. In particular the expressed tea juice is not contacted with the leaf residue during manufacture of the leaf tea and/or tea extract.

### Leaf Tea Production

The leaf residue may be processed to produce green leaf tea, black leaf tea or oolong leaf tea. In the case of oolong leaf tea and black leaf tea the process comprises fermenting the leaf residue. The manufacturing processes of green leaf tea, black leaf tea and oolong leaf tea are well known and suitable processes are described, for example, in "Tea: Cultivation to Consumption", K.C. Willson and M.N. Clifford (Eds), 1st Edn, 1992, Chapman & Hall (London), Chapters 13 and 14.

A step common to manufacture of all leaf teas is a drying step. In the case of oolong and black leaf tea, the drying step usually also serves to deactivate the fermentation enzymes. Efficient drying requires high temperatures and so it is preferred that the process comprises drying the leaf residue at a temperature of at least 75°C, more preferably at least 90 °C.

### Tea Extract Production

Although the leaf residue may be extracted with a solvent prior to drying of the leaf residue, in an especially preferred embodiment the extract is produced from made tea. Thus it is preferred that process comprises a step of processing the leaf residue to produce leaf tea and then extracting the leaf tea with a solvent to produce a tea extract. The most preferred solvent is an aqueous solvent. Preferably the aqueous solvent comprises at least 50% water by weight of the solvent, more preferably at least 90% and most preferably from 99 to 100%. The solvent may be cold and have a temperature, for example, in the range of from 1 to 50 °C. It is most preferred, however, that the solvent is hot as hot solvents tend to be more efficient at extracting tea solids. Thus it is preferred that the solvent temperature is greater than 50 °C, more preferably at least 70 °C and most preferably from 80 to 100 °C.

Preferably the solvent is contacted with the leaf residue for a time of at least 1 minute. However, because the leaf residue has a good rate of infusion, it is preferred that the solvent is contacted with the leaf residue in step (b) for a time of less than 1 hour, more preferably less than 30 minutes and most preferably less than 15 minutes.

The leaf residue and solvent are preferably contacted in a weight ratio in the range of 1:1 to 1:1000, more preferably from 1:4 to 1:100 and most preferably from 1:6 to 1:20.

Following contact of leaf residue with solvent, the leaf residue is usually separated from the liquid extract. Thus in a preferred embodiment, the process comprises a step of de-leafing the extract. This de-leafing step can readily be achieved, for example, by filtering and/or centrifuging the extract.

The invention will now be demonstrated with help of following non-limiting examples.

### EXAMPLES

### Example 1 - the effect of heat treatment of the tea juice on CO₂ production

Fresh tea leaves from a south Indian garden were taken and were withered for 18 hours to bring the moisture of the leaves to 75-80%. The tea leaves were subjected to CTC (cut tear curl) for 4 times to obtain macerated dhool. The dhool was fermented for 1 hour and then juice was squeezed out from the fermented dhool by a pneumatic press operating at a pressure of 6Kg/cm². About 1000 g of fresh dhool resulted into 280 mL of tea juice. The PPO activity of the fermented dhool was found to be 13118 units/g of the fresh tea leaves.

Insolubles from the tea juice were removed by centrifugation of the extracts at 8000 rpm for about 20 min (using a Beckman centrifuge) and the decanted juice was collected. Heat treatment was carried out on the decanted juice

The decanted juice was taken in a vial (5 mL juice in a 22 mL vial). The vial was sealed and placed in a hot water bath. The vial contents were heated to a specific temperature (65 °C, 75 °C or 85 °C) and the temperature maintained for a specific time period. The sealed vials were stored at temperature of 20 °C. Vials were taken out after specific durations of storage and analyzed for carbon dioxide.

In another experiment, the treatment of the decanted tea juice was carried out in FT74 UHT/HTST Processing System (Armfield, UK) where the juice was heated to 136 °C and held for 30 seconds and filled into 330 mL cans. During the filling operation, the temperature of the juice was 88 °C and it took about 1 minute to fill the can. The can was then sealed and cooled to 25 °C by immersing in a cold water bath for 15 minutes.

Protein precipitation in tea juice was done with chilled acetone. Chilled acetone was added to the tea juice on ice in the ratio of 1:1 gradually and slowly. This mixture was stirred on ice for 2 hours. Tea juice with acetone was then centrifuged at 10,000rpm for 10min to pellet out the proteins. The supernatant was discarded and the pellet was dissolved in a minimal amount of buffer. (Wessel, D., Flugge, U. 1. Anal. Biochem. 1984, 138, 141-143). This pellet was used as the source of enzyme for the assay for PPO activity.

The PPO activity was determined according to method of Moore and Flurkey, 1990 (Moore, B. M., Flurkey, W. H. Sodium sulphate activation of a plant polyphenol oxidase. J. Biol. Chem. 1990, 265, 4982-4988) by monitoring the o-quinone formation at 400nm using (+)-catechin as the substrate with a spectrophotometer (Perkin -Elmer). The assay was carried out over a period of 20 minutes in a reaction volume of 3 ml using 0.1 M sodium phosphate-citrate (pH 5.5) as the buffer and (+)-catechin (3mM) at 40°C with appropriate enzyme and substrates blanks. The reactions were arrested by addition of 0.2ml of stop mix solution consisting of acetonitrile, acetic acid and water (60:10:30, v/v/v). One unit of enzyme activity is defined as a change of 0.001 absorbance unit at 400 nm per minute in an aliquot of the enzyme used.

The headspace gas was analyzed by PBI Dansensor, a headspace gas analyzer. In this instrument carbon dioxide is analyzed by a non dispersive IR sensor. The cap of the sealed vial/can containing tea juice was pierced with the needle which is the inlet for the analyzer. After the analysis, results were expressed in terms of volume percentage.

The experiments were carried out at various time-temperature regimes as tabulated below along with the resulting CO₂ generation after storage time ranging from 0-38 days.

**Table 1: Effect of the treatment of the tea juice at 65-85 °C on CO₂ production**

| Temperature (°C) | Treatment time (minutes) | CO₂ (%) by volume in headspace | | | | | |
|---|---|---|---|---|---|---|---|
| | | 0 day | 5 days | 12 days | 19 days | 24 days | 38 days |
| 30 (Control) | 30 | 0 | 30.8 | 27.7 | 26.6 | 29 | 29.8 |
| 65 | 2 | 0 | 4.3 | 5.6 | 7 | 7.1 | 8.6 |
| 65 | 5 | 0 | 3 | 6.3 | 7.3 | 7.5 | 9.1 |
| 65 | 10 | 0.6 | 3.4 | 5.4 | 6.6 | 7.6 | 8.8 |
| 65 | 20 | 1.5 | 4.2 | 6.1 | 6.8 | 7.9 | 9.2 |
| 65 | 30 | 2.5 | 5.2 | 6.6 | 7.5 | 7.9 | 9 |
| 75 | 2 | 0.9 | 4.8 | 6.2 | 7.6 | 8 | 8.2 |
| 75 | 5 | 1.1 | 5.3 | 6.4 | 7.7 | 8 | 9.3 |
| 75 | 10 | 1.9 | 5.5 | 7.2 | 7.8 | 8 | 9 |
| 75 | 20 | 2.6 | 5.8 | 6.8 | 8.2 | 8.7 | 9.6 |
| 75 | 30 | 4 | 7.2 | 7.3 | 8.2 | 9.4 | 9.5 |
| 85 | 2 | 1.3 | 5.3 | 6.7 | 8 | 8.9 | 9.3 |
| 85 | 5 | 2.2 | 6 | 7.5 | 8 | 8.8 | 9.4 |
| 85 | 10 | 3.1 | 7.1 | 7.5 | 8 | 8.6 | 8.9 |
| 85 | 20 | 4.1 | 7.3 | 7.6 | 8.4 | 9.6 | 10 |
| 85 | 30 | 4.9 | 7.5 | 8.1 | 8.5 | 9.3 | 9.5 |

From the above data, it can be seen that subjecting the tea juice to heat treatment (temperature greater than 60 °C) leads to a significant reduction in the formation of carbon dioxide during storage as compared to the tea juice that is not subjected to heat treatment (i.e. the Control)

**Table 2: Effect of the treatment of the tea juice at 136 °C on CO₂ production**

| Temperature ( °C) | Treatment time (minutes) | Fermentation time of tea leaves prior to expression of juice (hours) | CO₂ (% by volume in headspace) after 8 months storage |
|---|---|---|---|
| 136 | 0.5 | 0 | 2.9 |
| 136 | 0.5 | 1 | 5.5 |
| 136 | 0.5 | 2 | 9.2 |

From the data in Table 2, it is clear that the treatment at the higher temperature (greater than 100 °C) results in a significant decrease in the amount of carbon dioxide even after 8 months of storage.

### Example 2- the effect of steaming prior to fermentation

Tea juice was prepared using the process described above (65-85 °C) in all respects except that the fresh tea leaves were steamed, i.e. exposed to steam (steam temperature 85 °C) after the step of withering and before the step of CTC. The PPO activity of the steamed tea leaf was found to be zero. The effect in terms of CO₂ formation, and aroma are given below.

**Table 3: Effect of steaming prior to fermentation**

| Temperature (°C) | Treatment time (minutes) | CO₂ (%) by volume in headspace | | Aroma of the juice |
|---|---|---|---|---|
| | | 0 day | 5 days | |
| 75 | 2 | 0.6 | 3.9 | Strong Cooked note |

It can be seen that the step of steaming reduces the problem of CO₂ production on one hand but on the other hand introduces a strong cooked note in the juice that is not preferable.

### Example 3 - the effect of tea solids in the juice

Decanted juice was prepared using the process described above. However, the decanted juice was diluted by adding water to vary the tea solids in the juice before subjecting the juice to heat treatment at 75 °C for 2 minutes. The results are tabulated below:

**Table 4: Effect of tea solids in the juice**

| | Tea solids (%) | Storage duration | CO₂ (% by volume) for tea juice with no thermal treatment |
|---|---|---|---|
| Control Juice | 4.6 | 5 days | 20.2 |
| Half diluted | 2.3 | 5 days | 18 |
| 5 fold diluted | 0.92 | 5 days | 15 |

It can be seen that in dilute juices, the problem related to carbon dioxide is relatively less severe even when there is no heat treatment.

### Example 4 - the effect of purging nitrogen on carbon dioxide production during storage

The following experiments were carried out using a different batch of set of fresh tea leaves (South Indian gardens). One experiment was carried out in the same manner as that reported in Table 1 (75 °C, 2 minutes). The other experiment was carried out in a the same manner as this experiment in all respects except that nitrogen gas was purged through the vial containing the juice for 3 minutes using a compressed nitrogen gas cylinder, before capping the vial. The sealed vials were then subjected to heat treatment (75 °C, 2 minutes) in the manner of the experiments in Table 1. The results of the carbon dioxide in the headspace as a function of storage duration are tabulated below for both these experiments.

**Table 5 :Effect of purging nitrogen on carbon dioxide production during storage**

| Storage duration (days) | Carbon dioxide in headspace (Volume %) | |
|---|---|---|
| | No purging with nitrogen | Purging with nitrogen |
| 0 | 0.9 | 0.8 |
| 8 | 9.6 | 6.2 |
| 13 | 11.1 | 6.8 |
| 23 | 12.6 | 7 |
| 30 | 14 | 6.5 |

From the results it is clear that a process involving a step of purging of gaseous nitrogen through the juice results in a further reduction in formation of carbon dioxide during storage.

## Claims

1. A process comprising the steps of:
(a) expressing juice from fresh tea leaves that have never been dried to a moisture content of less than 30% by weight, thereby to produce leaf residue and tea juice, wherein during the expression step the moisture content of the tea leaves is between 30 and 90% by weight,
(b) heating the tea juice to a temperature in the range 60-150 °C for a time period in the range of 0.5 seconds to 20 minutes, and;
(c) packaging the tea juice in a sealed container;
wherein the fresh tea leaves are not heat treated to deactivate fermentation enzymes prior to the step of expressing the juice.

2. A process as claimed in claim 1 wherein the juice comprises at least 4% by weight tea solids.

3. A process as claimed in any one of the preceding claims wherein a gas other than oxygen is purged through the juice prior to the step of packaging the liquid tea product in a sealed container.

4. A process as claimed in any one of the preceding claims wherein the fresh tea leaves are not subjected to a step of steaming or pan firing prior to the step of expressing the juice.

5. A process as claimed in any one of the preceding claims wherein the tea leaves have an enzyme activity of polyphenol oxidase (PPO) of at least 8000 units per gram of the tea leaves prior to the step of expressing the juice.

6. A process as claimed in any one of the preceding claims wherein the fresh tea leaves comprise material from *Camellia sinensis* var. *assamica.*

7. A process as claimed in any one of the preceding claims wherein the amount of expressed juice is from 50 mL to 800 mL per kg of fresh tea leaves.

8. A process as claimed in any one of the preceding claims wherein the amount of expressed juice is at least 75 ml per kg of the fresh tea leaves, preferably at least 100 ml.

9. A process as claimed in any one of the preceding claims wherein the moisture content of the fresh tea leaves from which juice is expressed in step (a) is from 60 to 90% by weight of the fresh tea leaves.

## Patentansprüche

1. Verfahren, umfassend die Schritte:
(a) Auspressen von Saft aus frischen Teeblättern, die niemals auf einen Feuchtigkeitsgehalt von weniger als 30 Gewichts-% getrocknet wurden, um dadurch Blattrückstand und Teesaft herzustellen, wobei während des Schritts des Auspressens der Feuchtigkeitsgehalt der Teeblätter zwischen 30 und 90 Gewichts-% liegt,
(b) Erhitzen des Teesafts auf eine Temperatur in dem Bereich von 60-150°C für eine Zeitdauer in dem Bereich von 0,5 Sekunden bis 20 Minuten und
(c) Verpacken des Teesaftes in einem verschlossenen Behälter,
wobei die frischen Teeblätter nicht wärmebehandelt werden, um Fermentationsenzyme vor dem Schritt des Auspressens des Saftes zu deaktivieren.

2. Verfahren, wie im Anspruch 1 beansprucht, wobei der Saft mindestens 4 Gewichts-% Teefeststoffe umfasst.

3. Verfahren, wie in irgendeinem der vorhergehenden Ansprüche beansprucht, wobei ein Gas, anders als Sauerstoff, vor dem Schritt des Verpackens des flüssigen Teeproduktes in einem verschlossenen Behälter durch den Saft gespült wird.

4. Verfahren, wie in irgendeinem der vorhergehenden Ansprüche beansprucht, wobei die frischen Teeblätter vor dem Schritt des Auspressens des Saftes keinem Schritt des Dämpfens oder des Pfannenröstens unterworfen werden.

5. Verfahren, wie in irgendeinem der vorhergehenden Ansprüche beansprucht, wobei die Teeblätter eine Enzymaktivität von Polyphenoloxidase (PPO) von mindestens 8000 Einheiten pro Gramm der Teeblätter vor dem Schritt des Auspressens des Saftes aufweisen.

6. Verfahren, wie in irgendeinem der vorhergehenden Ansprüche beansprucht, wobei die frischen Teeblätter Material von *Camellia sinensis var. assamica* umfassen.

7. Verfahren, wie in irgendeinem der vorhergehenden Ansprüche beansprucht, wobei die Menge des ausgepressten Saftes 50 ml bis 800 ml pro kg frischer Teeblätter beträgt.

8. Verfahren, wie in irgendeinem der vorhergehenden Ansprüche beansprucht, wobei die Menge des ausgepressten Saftes mindestens 75 ml pro kg frischer Teeblätter, vorzugsweise mindestens 100 ml, beträgt.

9. Verfahren, wie in irgendeinem der vorhergehenden Ansprüche beansprucht, wobei der Feuchtigkeitsgehalt der frischen Teeblätter, aus denen der Saft in Schritt (a) gepresst wird, 60 bis 90 Gewichts-% der frischen Teeblätter beträgt.

## Revendications

1. Procédé comprenant les étapes de :
(a) expression du jus de feuilles fraîches de thé qui n'ont jamais été séchées, jusqu'à une teneur en humidité inférieure à 30 % en poids, de façon à produire de ce fait un résidu de feuilles et un jus de thé, la teneur en humidité des feuilles de thé étant pendant l'étape d'expression comprise entre 30 et 90 % en poids,
(b) chauffage du jus de thé à une température comprise dans la plage de 60 à 150°C pendant un laps de temps compris dans la plage de 0,5 seconde à 20 minutes, et
(c) conditionnement du jus de thé dans un récipient hermétiquement fermé ;
dans lequel les feuilles fraîches de thé ne sont pas soumises à un traitement thermique de désactivation des enzymes de fermentation avant l'étape d'expression du jus.

2. Procédé tel que revendiqué dans la revendication 1, dans lequel le jus comprend au moins 4 % en poids d'extrait sec de thé.

3. Procédé tel que revendiqué dans l'une quelconque des revendications précédentes, dans lequel un gaz autre que l'oxygène est purgé à travers le jus avant l'étape de conditionnement du produit de thé liquide dans un récipient hermétiquement fermé.

4. Procédé tel que revendiqué dans l'une quelconque des revendications précédentes, dans lequel les feuilles fraîches de thé ne sont pas soumises à une étape d'étuvage ou de passage au wok avant l'étape d'expression du jus.

5. Procédé tel que revendiqué dans l'une quelconque des revendications précédentes, dans lequel les feuilles de thé présentent une activité enzymatique de polyphénol oxydase (PPO) d'au moins 8 000 unités par gramme de feuilles de thé avant l'étape d'expression du jus.

6. Procédé tel que revendiqué dans l'une quelconque des revendications précédentes, dans lequel les feuilles fraîches de thé comprennent un matériel provenant de *Camellia sinensisvar. assamica.*

7. Procédé tel que revendiqué dans l'une quelconque des revendications précédentes, dans lequel la quantité de jus exprimé est de 50 ml à 800 ml par kg de feuilles fraîches de thé.

8. Procédé tel que revendiqué dans l'une quelconque des revendications précédentes, dans lequel la quantité de jus exprimé est d'au moins 75 ml par kg de feuilles fraîches de thé, de préférence d'au moins 100 ml.

9. Procédé tel que revendiqué dans l'une quelconque des revendications précédentes, dans lequel la teneur en humidité des feuilles fraîches de thé dont le jus est exprimé dans l'étape (a) est de 60 à 90 % en poids par rapport aux feuilles fraîches de thé.
